# EUROPEAN PATENT SPECIFICATION

(11) **EP 1 112 304 B1**
(45) Date of publication and mention of the grant of the patent: **28.05.2003**
(21) Application number: 99939539.5
(22) Date of filing: 12.08.1999
(51) Int. Cl.: C08J 5/02, A41D 19/015, C08J 7/04, C09D 127/12

(54) **SOLVENT-RESISTANT GLOVE**
LÖSUNGSMITTELBESTÄNDIGER HANDSCHUH
GANT RESISTANT AUX SOLVANTS

(30) Priority: 13.08.1998 GB 9817702
(43) Date of publication of application: 04.07.2001
(73) Proprietor: LRC PRODUCTS LIMITED, Broxbourne, Hertfordshire EN10 6LN (GB)
(72) Inventor: THOMAS, Jonathan, David, Cambridge, Cambridgeshire CB1 3ND (GB); BRYANT, Angela, Cherry Hinton, Cambridge CB1 4YS (GB)
(74) Representative: Wain, Christopher Paul
(86) International application number: GB9902667
(87) International publication number: WO00009590

(56) References cited:
- EP-A- 0 167 758
- WO-A-96/23428
- US-A- 4 826 730
- US-A- 5 219 927

## Description

This invention relates to a process for making a solvent-resistant glove.

A range of solvent-resistant gloves is available, although the protection afforded against solvents varies markedly within the range. Gloves at one end of the range are inexpensive and comparatively easy to make but they typically offer protection against only one or two solvents. Those at the other end of the range offer protection against a much broader range of solvents. Such solvents include halogenated aliphatic and aromatic solvents, particularly those that are fluorinated or chlorinated; ketones; and aqueous acids and alkalis. Examples of gloves offering broad protection include those made from laminated films and those made from thick butyl rubber. Whilst offering good protection, however, many of these types of gloves are difficult to wear and unsuitable for fine manipulations within a laboratory setting.

It is known to improve the solvent resistance of a glove by coating an elastomeric substrate with a fluorinated elastomer such as Viton (trademark). Viton is a copolymer of hexafluoropropylene and vinylidene fluoride. Typically the elastomeric substrate is butyl rubber. The fluorinated elastomer layer is formed first by dipping a former into a solution of the fluorinated elastomer in an organic solvent, and the substrate layer is formed thereover by dipping. Ketones are commonly used as the solvent for the fluorinated elastomer. Whilst it is possible by this process to make satisfactory gloves, the necessity to use organic solvents is a serious disadvantage because of the health, safety and environmental risks associated therewith. Furthermore, it is usually necessary to alter the solvent system with every change in substrate and/or fluorinated elastomer, to avoid interference by the solvent on either layer. This adds to the cost of this technique and is generally undesirable.

We have now discovered a process for making a glove comprising an elastomeric substrate and a fluorinated elastomeric coating, in which process it is not necessary to use organic solvents. In particular, we have found that the fluorinated elastomeric coating can be deposited from an aqueous dispersion. This avoids the use of costly organic solvents, provides a much safer manufacturing process, and obviates the need for solvent disposal or recovery.

In one aspect, the present invention provides a process for making a thin, flexible glove comprising a substrate layer and a thin solvent-resistant layer comprising a fluorinated elastomer, wherein said solvent-resistant layer is formed from an aqueous dispersion of a fluorinated elastomer, and wherein the aqueous dispersion also contains a fluoroplastic in an amount less than 10% by solids weight of the dispersion.

The invention also includes a glove made by the above process.

We have found that the solvent resistance of the fluorinated elastomer layer is improved by including in the aqueous dispersion a small amount of a fluoroplastic resin such as polytetrafluoroethylene. By small amount, we mean preferably around 5% (by solids weight of the dispersion) although greater or less amounts can be used. The maximum amount should be less than 10%.

EP-A-0159268 describes modifying a fluoroplastic resin dispersion by including therein a fluoroelastomer latex in an amount from 5% to 90%, in order to reduce the tendency of coatings formed therefrom to crack. Whilst the specification refers to the possibility of making gloves, it is primarily concerned with coating fabrics and the lowest preparation of fluoroplastic exemplified is 50%. We have found that gloves made from such mixtures are not usefully solvent resistant.

The gloves of the invention are preferably close fitting thin elastomeric gloves especially suitable for use in laboratories or the like. The fluoroelastomer layer will normally be about 50µm thick (and not usually greater than 100µm) and the thickness of the glove wall (i.e. substrate and fluoroelastomer coating) about 0.4mm.

The gloves of the present invention are normally two-layer gloves, comprising a substrate coated on its external surface with a layer comprising a fluorinated elastomer. However, three-layer gloves are possible, comprising a substrate layer, a fluorinated elastomer layer and then another layer of substrate, the fluorinated elastomer being sandwiched between the two substrate layers.

The substrate is preferably elastomeric in which case any elastomer can be used which is suitable for glove making and to which the fluoroelastomer can bond. The substrate material should preferably have a low modulus such that the stress at 100% strain (S100%) does not exceed 5MPa. Suitable elastomeric substrate materials include, for example, butyl rubber, nitrile rubber, polychloroprene rubber, blends of nitrile rubber and polychloroprene, natural rubber, synthetic polyisoprene rubber, polyurethanes and combinations of any two or more of the above.

We prefer to use a 'soft' nitrile rubber such as one consisting of carboxylated acrylonitrile-butadiene of relatively low acrylonitrile content. Examples of such soft rubbers are Synthomer 6000 (composition by percentage weight: butadiene 70, acrylonitrile 26, methacrylic acid 4; Synthomer Ltd. of Grimsby) and a 70:30 blend of Synthomer 6000 and Neoprene 750 (trademark of a polychloroprene rubber) which blend is available as Synthomer 6510 (Synthomer Ltd. of Grimsby).

We prefer to provide the substrate layer(s) by dipping a glove-shaped former into an aqueous dispersion of the substrate elastomer. Such dispersions will also normally contain other components such as fillers, crosslinking agents and accelerators, as will be clear to those skilled in the art. Generally, the dispersion will contain:

| | Parts by wt (dry) |
|---|---|
| Elastomer | 100 |
| Crosslinking agent | 0.5 - 5.0 |
| Viscosity modifier | 0.2 - 2.0 |
| Acid Scavenger | 0 - 30 |
| Water | to provide 30-50% total solids |

Whilst gloves of the present invention will most usually comprise an elastomeric substrate, they can alternatively have a non-elastomeric substrate such as a woven material, eg. a cotton liner.

The layer of fluoroelastomer is preferably formed by dipping a former (optionally bearing the substrate layer) into an aqueous dispersion of the fluoroelastomer. Generally the dispersion will also contain other materials such as a crosslinking agent, a viscosity modifier and an acid 'scavenger'.

Any fluoroelastomer can be used which is sufficiently elastic to deform with the substrate layer without separating or cracking and which can be provided as an aqueous dispersion suitable for dipping. The fluoroelastomer should form a suitable layer on the glove former (or on the substrate layer).

Such fluoroelastomers may be obtained by copolymerisation of vinylidene fluoride (1,1-difluoroethylene) with one or more comonomers selected from chlorotrifluoroethylene, hexafluoropropylene, 1-hydropentafluoropropylene, perfluoro(methyl vinyl ether), and tetrafluoroethylene. Copolymers of vinylidene fluoride with hexafluoropropylene and tetrafluoroethylene are preferred.

The intended function of the fluoroelastomer layer is to provide solvent resistance, so fluoroelastomers that have good qualities consistent therewith are to be preferred. Since solvent resistance generally increases with the fluorine content of the polymer, a high degree of fluorination is preferred, for example, 65 to 71 weight per cent fluorine; more preferably, 67 to 71 weight per cent fluorine.

As previously stated, we have found that solvent resistance can be increased by mixing a small amount of a fluoroplastic with the fluorinated elastomer. The term "fluoroplastic" is to be understood to encompass both hydrogen-containing fluoroplastics and hydrogen-free perfluoroplastics. Fluoroplastic polymers are thus those which have some or all of the hydrogen replaced by fluorine. The preferred fluoroplastic is polytetrafluoroethylene, but other fluoroplastics may also be used such as fluorinated ethylene propylene (FEP) copolymer, perfluoroalkoxy (PFA) resin, chlorotrifluoroethylene and copolymers thereof with vinylene fluoride, ethylene-chloro-trifluoroethylene (ECTFE) copolymer, ethylenetetrafluoroethylene (ETFE) copolymer, polyvinylidene fluoride (PVDF), and polyvinylfluoride.

A particularly preferred aqueous dispersion of a fluoroelastomer is commercially available under the trade name Fluorobase T300 (from Ausimont UK of Putney). This is a high-solids (65-70 wt%) dispersion of an emulsion copolymer of vinylidene fluoride, hexafluoropropylene, and tetrafluoroethylene, blended with about 5% of a polytetrafluoroethylene dispersion. It has a fluorine content of 67-69 wt%. In order to achieve the high solids content, a suitable surfactant is employed to obtain a high concentration of monomers in emulsion prior to polymerisation.

A crosslinking agent is usually included to covalently crosslink the fluoroelastomer so as to improve the tensile strength of the glove. Suitable crosslinkers include water-soluble or dispersible diamines; bisphenols, such as bisphenol A and bisphenol AF; and organic peroxides. A preferred crosslinker is Fluorobase T520 (ex-Ausimont) which is 1,4-bis(3-aminopropyl) piperazine.

A viscosity modifier is optional. It is preferably included in the aqueous dispersion because it can assist the formation of the fluoroelastomer film on the elastomeric substrate and can exert control over its thickness. One suitable viscosity modifier is Carbopol Aqua 30 (B.F. Goodrich) which is an acrylic thickener supplied as a 30% solution. It is diluted for use as a 2.6% solution in water. We typically use about 0.23 phr with respect to fluoroelastomer content (which is about 0.006 parts dry weight). Other viscosity modifiers that can be used, but are less preferred, include polysaccharide gums, polyvinyl alcohols and clays. The quantity of modifier to be used will depend on its nature and on the desired viscosity, which will depend, in turn, on the thickness of fluoroelastomer film required. For the Mowiol 18-88 modifier, it was found that a 33 seconds B3 flow cup viscosity was desirable to obtain a fluoroelastomer film thickness of 50 microns.

An acid 'scavenger' is included in the dispersion to react with any hydrogen fluoride generated during the cross linking reaction. Preferred scavengers are metal oxides, particularly zinc oxide, magnesium oxide, and calcium hydroxide. Antiwebbing agents and other additives may also be included as will be clear to those skilled in the art.

In general the aqueous dispersion of fluoroelastomer will comprise:

| | Parts by wt (dry) | Preferred range |
|---|---|---|
| Fluoroelastomer | 100 | 100 |
| Crosslinker | 0.1 - 5.0 | 0.2 - 3.0 |
| Acid Scavenger | 1 - 15 | 2 - 15 |
| Viscosity modifier (for 33s B3 flow cup viscosity) | .005+ | .005+ |
| Water to solids content of (wt%) | 64 | 62-65 |

One preferred formulation is:

| | Parts by wt (dry) |
|---|---|
| 67% Fluorobase T300 dispersion | 100 |
| 50% Fluorobase T520 solution | 1 |
| Zinc oxide | 5 |
| Carbopol Aqua 30 | to 33s B3 flow cup viscosity |

If desired, the formulation may also contain a coloured pigment. Suitable pigments include Unisperse Red FBN-P1 (Ciba), Unisperse Violet BE (Ciba) and Colanyl Blue (Hoechst).

The gloves of the invention are preferably made by dipping. By way of example, the following stepwise procedure can be used to make a glove comprising an inner layer of elastomeric substrate and an outer layer of fluoroelastomer.
1. Preheat former for example to 60 to 80°C, preferably about 70°C.
2. Dip former in a coagulant, such as a 20% aqueous solution of calcium nitrate.
3. Dry the former.
4. Dip former into aqueous dispersion of the elastomeric substrate material.
5. Dry the coated former e.g. at 110°C, for example for about 20 minutes.
6. Leach in water to remove coagulant, e.g. at about 65°C for about 5 minutes.
7. Dry, e.g. at 120°C until film temperature is 90 - 100°C.
8. Dip the coated former into an aqueous dispersion containing fluoroelastomer.
9. Dry, e.g. at 110-125°C for 20 minutes.

In stages 4 and 8, a single dip is preferred. Repeated dipping leads to thicker layers of substrate and/or fluoroelastomer and this can be employed if necessary. The above process is preferably used to form a glove whose overall thickness (across one wall) is not more than 0.25 mm but it can be used for gloves up to about 0.4mm thickness. The fluoroelastomer layer can be up to 100 µm thick but is preferably about 50 µm thick. This results in a thin, highly usable glove that is comfortable to wear and offers superior solvent-resistance over existing gloves of corresponding thickness. Depending on the choice of materials, the glove can be effective against aromatic and halogenated solvents, and, in particular, can show good resistance to toluene and xylene. The glove can be produced either in ambidextrous or in handed form, with or without a grip pattern.

Alternatively, it is possible to coat the former with mould release agent and then to dip first into the fluoroelastomer (step 8 above) and then follow with steps 9 and 6 and then, after drying, to follow step 2 (but with an alcoholic solution of calcium nitrate) and through to step 5. Suitable mould release agents are those based upon fluorocarbon polymers sold under the tradename McLube (manufactured by Loctréc AB).

In another procedure, heat sensitised latices can be used (by addition of polyvinyl methyl ether or Coagulant WS (Bayer) for example, to avoid the coagulant dip steps.

The process of the present invention can also be used to make a glove wherein a fluoroelastomeric layer is sandwiched between two layers of elastomeric substrate. This results in a thicker glove that is particularly suitable for industrial use. We prefer to make this a handed glove incorporating a grip pattern. This type of glove is intended to be used for heavier tasks requiring more physical protection and so the elastomeric substrate material will be chosen accordingly. We prefer to use a blend of Perbunan N latex VT (composition by percentage weight: butadiene 66, acrylonitrile 30, methacrylic acid 4; Bayer) and Synthomer 99G43 (a high acrylonitrile nitrile latex with composition by percentage weight: butadiene 55, acrylonitrile 39, methacrylic acid 6). Other latices displaying similar physical properties to the above blend can also be used; for example, blends of Synthomer 99G43 with Perbunan N latex T (composition by percentage weight: butadiene 63, acrylonitrile 35, methacrylic acid 2; Bayer) or with Perbunan N latex 3415M (composition by percentage weight: butadiene 63, acrylonitrile 33, methacrylic acid 4; Bayer).

An aqueous dispersion of fluorinated elastomer as previously described is employed to provide the fluoroelastomer layer in this three-layer glove.

One example of a process for making the three-layer glove comprises steps 1-9 outlined above for the thin, laboratory-use glove and the following additional steps:
10. Cool dip in coagulant (e.g. 20% alcoholic solution of calcium nitrate).
11. Dip into aqueous dispersion of elastomeric substrate material.
12. Dry, e.g. at 110-125°C for 20 minutes.

Again, single dips are preferred but more than one can be used if necessary. This process is very suitable for making an industrial-use glove with a single wall thickness of no more than about 0.4 mm. The fluoroelastomer layer is preferably 50 µm thick but can be as thick as 100 µm.

In order that the invention may be more fully understood, the following Examples are given by way of illustration only.

### Example 1

A glove-shaped former was heated to 70°C and then dipped in a 20% aqueous solution of calcium nitrate. The former was dried at 70°C for 1 minute and then dipped for 5 seconds into a compounded Synthomer 6000 dispersion.

The coated former was dried at 110°C for 20 minutes and then washed in water at a temperature of 65°C for 5 minutes to remove excess coagulant. The former was dried at 120°C until the layer of coagulated substrate was at a temperature of 100°C. The former was then dipped for 10 seconds into an aqueous dispersion of fluoroelastomer, which dispersion had the following composition:

| | Parts by weight (dry) |
|---|---|
| 67% Fluorobase T300 dispersion | 100 |
| 50% Fluorobase T520 solution | 1 |
| Zinc oxide | 5 |
| Carbopol Aqua 30 | To 33s B3 flow cup viscosity |

The formulation of a suitable aqueous zinc oxide dispersion will be well known to those skilled in the art.

The former was then heated at 115°C for 20 minutes to dry and crosslink the fluoroelastomer and complete vulcanisation of the rubber. The finished glove was dusted with talc and then stripped from the former. This glove had a single wall thickness of about 250 µm.

### Example 2

A glove was made according to the procedure described in Example 1 except that the substrate layer was formed from a compounded Synthomer 6510 dispersion.
This glove had the following physical characteristics:

| | |
|---|---|
| Thickness (single wall) | 250 µm |
| S100 % | 1.2 MPa |
| Elongation at break | 500% |

### Example 3

A glove-shaped former was heated to 70°C for 1 minute and then dipped for 5 seconds into a compounded blend of Perbunan N latex VT Synthomer 99G43 dispersions.

The coated former was dried at 125°C for 15 minutes and then washed in water at a temperature of 65°C for 5 minutes to remove excess coagulant. The former was dried at 120°C until the layer of coagulated substrate was at a temperature of 100°C. The former was then dipped for 10 seconds into the aqueous dispersion of fluoroelastomer given in Example 1.

The former was heated at 115°C for 20 minutes and then dipped in a cool (15-25°C) 20% alcoholic solution of calcium nitrate. This dipping is employed to wet the surface of the layer of fluoroelastomer so that it can be coated with a second layer of substrate material. The former was dipped again for 60 seconds into the substrate solution given above and then dried for 20 minutes at 115°C. The finished glove was dusted with talc and stripped from the former. This 'sandwich' type glove had the following physical characteristics:

| | |
|---|---|
| Thickness (single wall) | 400 µm |
| S100% | 2.88 MPa |
| Tensile strength | 24.7 MPa |

Upon testing, the glove in each of the Examples showed good solvent-resistance against a broad range of solvents.

### Example 4

It is an important requirement of the close-fitting thin elastomeric gloves of the invention that the solvent-resistance is not reduced upon stretching. It will be appreciated that the gloves are necessarily stretched at donning. We have tested the gloves of Example 2 herein by measuring their resistance, before and after stretching, to permeation by chloroform and toluene. There was no change with chloroform and only a very slight diminution in resistance to toluene. The numerical results are in the Table I below.

The solvent-resistance was determined following the methods described in the European standard for measuring permeation resistance, EN374 part 3:1994. *Protective gloves against chemicals and micro-organisms Part 3:* *Determination of resistance to permeation by chemicals.* The resistance of a protective glove material to permeation is determined by measuring the breakthrough time of the chemical through the glove material. In the permeation test apparatus, the glove material partitions the test chemical from the collecting medium. The collecting medium, which can be a gas or a liquid is analysed quantitatively for its concentration of the test chemical and thereby the amount of that chemical that has permeated the barrier as a function of time after initial contact with the glove material. The breakthrough time is deemed to have occurred when the analytical equipment detects a permeation rate of 1µg/cm²/min. The reported breakthrough time for any particular glove material/chemical combination is the mean of three determinations.

In the present tests for both chloroform and toluene, the collecting medium was nitrogen and the analytical technique used was gas chromatography.

The stretching of the samples was carried out by extending them ten times in one direction to 1.5 times the original unstretched dimension (that is, a 50% elongation), allowing the sample to return to its original dimensions in-between stretches. The samples were then stretched in a direction orthogonal to the first stretching direction, ten times to 1.5 times the original unstretched dimension, allowing the sample to return to its original dimension in-between stretches. The samples were then tested for solvent-resistance.

By way of comparison, thin films were made from a 50/50 blend of an aqueous dispersion of a terpolymer of vinylidene fluoride/hexafluoro-propylene/tetrafluoroethylene and an aqueous dispersion of polytetrafluoroethylene. The composition was essentially the same as Fluorobase T300 used in Example 1 except that the proportions of terpolymer and polytetrafluoroethylene were different The dispersion was compounded as in Example 1 and thin films laid down on the same substrate as in Example 1. The permeabilities of the films, before and after stretching, were then measured.
The results were:

**TABLE I**

| Sample | Elongation | Solvent | Permeation time (m) |
|---|---|---|---|
| Example 2 | - | CHCl₃ | 62 |
| Example 2 | 50% | CHCl₃ | 58 |
| Example 2 | - | toluene | 95 |
| Example 2 | 50% | toluene | 77 |
| Comparison | - | CHCl₃ | 2 |
| Comparison | 50% | CHCl₃ | 4 |
| Comparison | - | toluene | 35 |
| Comparison | 50% | toluene | 9 |

## Claims

1. A process for making a thin, flexible glove comprising a substrate layer and a thin solvent-resistant layer comprising a fluorinated elastomer, wherein said solvent-resistant layer is formed from an aqueous dispersion of a fluorinated elastomer, and wherein the aqueous dispersion also contains a fluoroplastic in an amount less than 10% by solids weight of the dispersion.

2. A process according to claim 1, wherein the glove further comprises a second substrate layer such that the solvent-resistant layer is sandwiched between the first and second substrate layers.

3. A process according to claim 1 or 2, wherein the fluorinated elastomer is a copolymer of vinylidene fluoride with one or more of the monomers tetrafluoroethylene, hexafluoropropylene, chlorotrifluoroethylene, 1-hydropentafluoropropylene, and perfluoro(methyl vinyl ether).

4. A process according to claim 1, 2 or 3, wherein the fluoroplastic is polytetrafluoroethylene.

5. A process according to any preceding claim, wherein the aqueous dispersion comprises, as fluorinated elastomer, a copolymer of vinylidene fluoride, hexafluoropropylene and tetrafluoroethylene, and polytetrafluoroethylene as the fluoroplastic.

6. A process according to any of claims 1 to 5, wherein the aqueous dispersion also comprises a crosslinking agent and an acid-scavenger.

7. A process according to claim 6, wherein the crosslinking agent is a water-soluble or dispersible diamine; a bisphenol; a peroxide; or 1,4-bis(3-aminopropyl)piperazine.

8. A process according to claim 6 or 7, wherein the acid-scavenger is a metal oxide, preferably zinc oxide or magnesium oxide.

9. A process according to any of claims 1 to 8, wherein a viscosity modifier is also included in the aqueous dispersion.

10. A process according to claim 9, wherein the viscosity modifier is polyvinyl alcohol; a polysaccharide gum; an acrylic type thickener; or a clay.

11. A process according to any of claims 1 to 10, wherein the glove is a thin close-fitting elastomeric glove and the substrate layer is elastomeric.

12. A process according to claim 11, wherein a layer of an elastomeric substrate material is coated with a layer of the fluorinated elastomeric material.

13. A process according to claim 12, wherein the elastomeric substrate is formed from butyl rubber latex, nitrite latex, polychloroprene latex, a blend of nitrile and polychloroprene latices, natural rubber latex, synthetic polyisoprene latex, polyurethane dispersions/solutions or combinations of any two or more of the above.

14. A process according to claim 13, wherein the elastomeric substrate material is formed from a high acrylonitrile nitrile latex or a blend of a high acrylonitrile latex and a nitrile latex.

15. A process according to any of claims 1 to 10, wherein the substrate is a woven material.

16. A process according to claim 15, wherein the woven material is a cotton liner.

## Patentansprüche

1. Verfahren für die Herstellung eines dünnen, flexiblen Handschuhs, der eine Substratschicht und eine dünne lösungsmittelbständige, ein fluoriertes Elastomer umfassende Schicht umfasst, wobei die lösungsmittelbständige Schicht aus einer wässrigen Dispersion eines fluorierten Elastomers gebildet ist und wobei die wässrige Dispersion auch einen fluorierten Kunststoff in einer Menge von weniger als 10 Gew.-%, auf das Gewicht der Feststoffe der Dispersion bezogen, enthält.

2. Verfahren nach Anspruch 1, wobei der Handschuh des weiteren eine zweite Substratschicht derart umfasst, dass die lösungsmittelbeständige Schicht zwischen den ersten und zweiten Substratschichten eingekeilt ist.

3. Verfahren nach Anspruch 1 oder 2, wobei das fluorierte Elastomer ein Copolymer von Vinylidenfluorid mit einem oder mehreren der Monomere Tetrafluorethylen, Hexafluorpropylen, Chlortrifluorethylen, 1-Hydropentafluorpropylen und Perfluor(methylvinylether) ist.

4. Verfahren nach Anspruch 1, 2 oder 3, wobei der fluorierte Kunststoff Polytetrafluorethylen ist.

5. Verfahren nach einem der vorhergehenden Ansprüche, wobei die wässrige Dispersion als fluoriertes Elastomer ein Copolymer von Vinylidenfluorid, Hexafluorpropylen und Tetrafluorethylen, und Polytetrafluorethylen als fluorierten Kunststoff umfasst.

6. Verfahren nach einem der Ansprüche 1 bis 5, wobei die wässrige Dispersion auch ein Vemetzungsmittel und einen Säurefänger umfasst.

7. Verfahren nach Anspruch 6, wobei das Vernetzungsmittel ein wasserlösliches oder dispergierbares Diamin, ein Bisphenol, ein Peroxid oder 1,4-bis(3-Aminopropyl)piperazin ist.

8. Verfahren nach Anspruch 6 oder 7, wobei der Säurefänger ein Metalloxid, bevorzugt Zinkoxid oder Magnesiumoxid, ist.

9. Verfahren nach einem der Ansprüche 1 bis 8, wobei ein Viskositätsmodifiziermittel ebenfalls in der wässrigen Dispersion enthalten ist.

10. Verfahren nach Anspruch 9, wobei das Viskositätsmodifiziermittel Poylvinylalkohol, ein Polysaccharidgummi, ein Verdickungsmittel vom Acryltyp oder ein Ton ist.

11. Verfahren nach einem der Ansprüche 1 bis 10, wobei der Handschuh ein dünner, eng anliegender elastomerer Handschuh und die Substratschicht elastomer ist.

12. Verfahren nach Anspruch 11, wobei eine Schicht eines elastomeren Substratmaterials mit einer Lage des fluorierten elastomeren Materials beschichtet ist.

13. Verfahren nach Anspruch 12, wobei das elastomere Substrat aus Butylkautschuklatex, Nitrillatex, Polychloroprenlatex, einer Mischung von Nitrilund Polychloroprenlatizes, Naturkautschuklatex, synthetischem Polyisoprenlatex, Polyurethandispersionen/-lösungen oder Kombinationen von irgendwelchen zwei oder mehren der obigen ist.

14. Verfahren nach Anspruch 13, wobei das elastomere Substratmaterial aus einem Nitrillatex mit hohem Acrylnitrilgehalt oder einer Mischung eines Latex mit hohem Acrylnitrilgehalt und einem Nitrillatex gebildet ist.

15. Verfahren nach einem der Ansprüche 1 bis 10, wobei das Substrat ein Gewebe ist.

16. Verfahren nach Anspruch 15, wobei das Gewebe eine Baumwollabfütterung ist.

## Revendications

1. Méthode de fabrication d'un gant mince et souple comprenant une couche de substrat et une couche mince résistante au solvant contenant un élastomère fluoré, dans laquelle ladite couche résistante au solvant est formée à partir d'une dispersion aqueuse d'un élastomère fluoré et dans laquelle la dispersion aqueuse contient également un plastique fluoré dans une quantité inférieure à 10% en poids solide de la dispersion.

2. Méthode selon la revendication 1, dans laquelle le gant comprend en outre une seconde couche de substrat de sorte que la couche résistante au solvant est prise en sandwich entre la première et la seconde couches de substrat.

3. Méthode selon la revendication 1 ou 2, dans laquelle l'élastomère fluoré est un copolymère de fluorure de vinylidène avec ou plusieurs monomères suivants : tétrafluoréthylène, hexafluoropropylène, chlorotrifluoréthylène, 1-hydropentafluoropropylène et (éther de vinyle méthylique) perfluoré.

4. Méthode selon la revendication 1, 2 ou 3, dans laquelle le plastique fluoré est du polytétrafluoréthylène.

5. Méthode selon l'une des revendications précédentes dans laquelle la dispersion aqueuse comprend, sous forme d'élastomère fluoré, un copolymère de fluorure de vinylidène, hexafluoropropylène et tétrafluoréthylène, et du polytétrafluoréthylène comme plastique fluoré.

6. Méthode selon l'une quelconque des revendications 1 à 5, dans laquelle la dispersion aqueuse comprend également un agent de réticulation et un absorbant d'acide.

7. Méthode selon la revendication 6, dans laquelle l'agent de réticulation est une diamine dispersible ou soluble dans l'eau; un bisphénol ; un peroxyde, ou bien un 1,4-bis(3-aminopropylàpiperazine.

8. Méthode selon la revendication 6 ou 7, dans laquelle l'absorbant d'acide est un oxyde de métal, de préférence de l'oxyde de zinc ou de l'oxyde de magnésium.

9. Méthode selon l'une quelconque des revendications 1 à 8, dans laquelle un modificateur de viscosité est également inclus dans la dispersion aqueuse.

10. Méthode selon la revendication 9, dans laquelle le modificateur de viscosité est de l'alcool de polyvinyle ; une gomme de polysaccharide ; un épaississeur de type acrylique ; ou bien une argile.

11. Méthode selon l'une quelconque des revendications 1 à 10 dans laquelle le gant est un gant mince élastomère serré et la couche de substrat est élastomère.

12. Méthode selon l'une des revendications 11, dans laquelle une couche de matériau de substrat élastomère est revêtue d'une couche du matériau élastomère fluoré.

13. Méthode selon la revendication 12, dans laquelle le substrat élastomère est formé de latex de caoutchouc de butyle, de latex de nitrile, de latex de polychloroprène, d'un mélange de treillis de nitrile et de polychloroprène, de latex de caoutchouc naturel, de latex polyisoprène synthétique, de dispersions/ solutions de polyuréthane ou combinaisons de deux éléments ci-dessus ou davantage.

14. Méthode selon la revendication 13, dans laquelle le matériau de substrat élastomère est formé d'un latex de nitrile à forte teneur en nitrile acrylique ou d'un mélange de latex à forte teneur en nitrile acrylique et d'un latex à forte teneur de nitrile.

15. Méthode selon l'une quelconque des revendications 1 à 10, dans laquelle le matériau est un matériau tissé.

16. Méthode selon la revendication 15, dans laquelle le matériau tissé est un revêtement de coton.
